# EUROPÄISCHE PATENTANMELDUNG

(11) **EP 1 353 093 A1**
(43) Veröffentlichungstag der Anmeldung: **15.10.2003**
(21) Anmeldenummer: 03008255.6
(22) Anmeldetag: 09.04.2003
(51) Int. Cl.: F16H 25/24

(54) **Linearantriebseinrichtung**

(30) Priorität: 10.04.2002 DE 10215832
(71) Anmelder: Neff Antriebstechnik Automation GmbH, D-71111 Waldenbuch (DE)
(72) Erfinder: Hermann, Martin, 70163 Sindelfingen (DE); Schön, Uwe, 70771 Leinfelden-Echterdingen (DE); Bross, Andreas, 71144 Steinenbronn (DE)
(74) Vertreter: Rüger, Barthelt & Abel Patentanwälte

(57) **Zusammenfassung**

Eine Linearantriebseinrichtung (1) weist einen Führungskörper (2) auf, in dessen Innenraum (35) eine Halteeinrichtung vorgesehen ist, die durch Führungsnuten (57, 58) und/oder Rastnuten gebildet ist. Diese dienen der Befestigung eines Mittelprofilelements (35), das den Innenraum (34) nach außen abdeckt. Das Mittelprofilelement (35) begrenzt mit dem Führungskörper (2) zwei Schlitze (38, 39), die relativ schmal sind und mit schmalen Abdeckbändern (41, 42) abgedeckt werden können. Dadurch wird es möglich, relativ breite, dafür aber flache Führungskörper (2) vorzusehen, bei denen die Lagereinrichtung an beiden Seiten des Grundabschnitts (25) angeordnet ist. Dies ergibt eine hohe Steifigkeit und eine gute Führung des Schlittens (3). Außerdem können an der Halteeinrichtung (57, 58) unterschiedliche Mittelprofilelemente (35) angeschlossen werden, die unterschiedliche Antriebskonzepte mit ein und demselben Führungskörper (2) ermöglichen.

## Beschreibung

Die Erfindung betrifft eine Linearantriebseinrichtung.

Aus der EP 0327705 B1 eine Linearantriebseinrichtung bekannt, die einen Führungskörper und einen daran verfahrbar gelagerten Schlitten aufweist. Der Führungskörper ist ein beispielsweise u-förmiges, im Außenumriss rechteckiges oder quadratisches Strangpressprofil, das einen Innenraum umschließt. Letzteres nimmt einen Spindeltrieb zum Antrieb des Schlittens auf. Der Schlitten ist über eine Kugelumlaufführung an Führungsbahnen gelagert, die in oberen Enden der Seitenwangen des Führungskörpers gehalten sind. Oberhalb der Führungsbahnen sind Rastrippen zur Lagerung eines Abdeckbands vorgesehen. In dem Innenraum des Führungskörpers sind Spindelabstützelemente vorgesehen, die bei der Bewegung des Wagens in vorgegebenen Abständen zurück gelassen werden und die Spindel in dem Führungskörper abstützen. Stößt der Wagen in Fahrtrichtung an Spindelabstützelemente an, löst er diese aus ihrer zeitweiligen Verankerung und sammelt sie gewissermaßen auf.

Dieser Linearantrieb ist für den Antrieb mit einem Spindelgetriebe, nicht aber für den Antrieb mit anderen Antriebseinrichtungen eingerichtet. Außerdem baut der Antrieb relativ hoch.

Davon ausgehend ist es Aufgabe der Erfindung, die Linearantriebseinrichtung weiter zu entwickeln.

Die erfindungsgemäße Linearantriebseinrichtung löst diese Aufgabe. Sie weist einen Führungskörper auf, der in seinem Innenraum eine Halteeinrichtung zur Befestigung eines Mittelprofilelements aufweist. Dieser öffnet ein weites Spektrum zusätzlicher Möglichkeiten. Der Führungskörper kann durch diese Maßnahme relativ breit, dabei aber niedrig dimensioniert werden. Die Seitenwangen können niedriger als die halbe Breite des Grundabschnitts ausgelegt werden. Der sich ergebende große Abstand zwischen den Seitenwangen wird dann zum großen Teil von dem Mittelstück verschlossen. Damit können die Lagereinrichtungen zur Lagerung des Schlittens wiederum in dem Innenraum des Führungskörpers angeordnet werden. Dies ermöglicht die besonders steife Positionierung entsprechender Laufschienen - auf die etwaige Nachgiebigkeit der Seitenwangen kommt es dabei in nur noch ganz untergeordnetem Maße an. Dies insbesondere dann wenn die Lagereinrichtungen in den Eckbereichen des Führungskörpers angeordnet werden, bei denen die Seitenwangen in den Grundabschnitt übergehen. Als besonders zweckmäßig hat sich hier die Anordnung der Führungsschienen unter einem Winkel von etwa 45° erwiesen. Dies ergibt eine gute Führungsqualität in allen Querrichtungen des Führungskörpers.

Die Halteeinrichtung zur Befestigung des Mittelprofilelements ermöglicht außerdem die Verwendung unterschiedlicher Mittelprofilelemente, je nach Antriebskonzept. Beispielsweise kann ein erstes Mittelprofilelement so gestaltet sein, dass es den Antrieb des Schlittens durch Zugmittel, beispielsweise einen Zahnriemen, gestattet. Ein anderes Mittelprofilelement kann hingegen auf die Unterbringung eines Spindeltriebs in den Innenraum als Antrieb für den Schlitten eingerichtet sein. Damit wird die Möglichkeit eröffnet, mit ein und demselben Grundprofil für den Führungskörper unterschiedliche Linearachsenkonzepte zu verwirklichen.

Als Halteeinrichtung für das Mittelprofilelement werden vorzugsweise Formschlussprofile genutzt. Diese sind vorzugsweise in dem Innenraum des Führungskörpers bevorzugterweise zwischen den Lagereinrichtungen an dem Grundabschnitt angeordnet. Formschlussprofile ermöglichen die schnelle und sichere Halterung des Mittelprofilelements.

Die Formschlussprofile sind vorzugsweise in Form auf einander zu weisender, sich über die Länge des Führungskörpers längs erstreckende Nuten gebildet. Die Nuten können so ausgebildet sein, dass das Mittelprofilelement direkt eingerastet oder in Längsrichtung eingeschoben wird. Vorzugsweise weist das Mittelprofil entsprechend vorstehende Rippen an zumindest geringfügig elastischen Wandabschnitten auf, die eine spielfreie Lagerung des Mittelprofilelements an dem Führungskörper gestatten. Das Mittelprofilelement kann auch längs in den Führungskörper eingeschoben sein.

Weiter ist es möglich, das Mittelprofilelement mittelbar über Zwischenstücke, beispielsweise Spindelabstützelemente, an dem Führungskörper zu lagern. Diese Lagerung erfolgt wegen der Verschiebbarkeit der Spindelabstützelemente mit etwas Spiel. Um das Mittelprofilelement dennoch ruhend zu lagern, kann dieses an entsprechenden Endstücken, die an den Enden an den Führungskörper angesetzt sind, gelagert sein.

Das Mittelprofilelement begrenzt mit den Seitenwangen jeweils einen Schlitz, der von einem Abdeckband abgedeckt sein kann. Zur Lagerung des Abdeckbands können die Ränder des Schlitzes mit entsprechenden Rastprofilen versehen sein. Somit sind zwei Schlitze vorhanden, durch die entsprechende Stege des Schlittens greifen. Diese Stege tragen die Lagereinrichtung und stützen den Schlitten somit mit großer Stützweite an dem Führungskörper ab. Dadurch ist die Linearantriebseinrichtung in der Lage, zusätzlich zu etwaigen Querkräften in allen Querrichtungen, auch Torsionsmomente abzustützen. Dies kann zusätzliche Anwendungen erschließen.

Weitere Einzelheiten vorteilhafter Ausführungsformen ergeben sich aus Unteransprüchen, der Zeichnung oder der Beschreibung.

In der Zeichnung sind Ausführungsbeispiele der Erfindung veranschaulicht. Es zeigen:
- Figur 1: die Linearantriebseinrichtung mit Spindelantrieb in perspektivischer Darstellung,
- Figur 2: die Linearantriebseinrichtung nach Figur 1 in Querschnittsdarstellung,
- Figur 3: eine Linearantriebseinrichtung mit Spindelgetriebe und abgewandelter Lagerung in Querschnittsdarstellung,
- Figur 4: eine Linearantriebseinrichtung mit Riementrieb in Querschnittsdarstellung und
- Figur 5: eine Linearantriebseinrichtung mit Riementrieb und abgewandelter Lagereinrichtung in Querschnittsdarstellung.

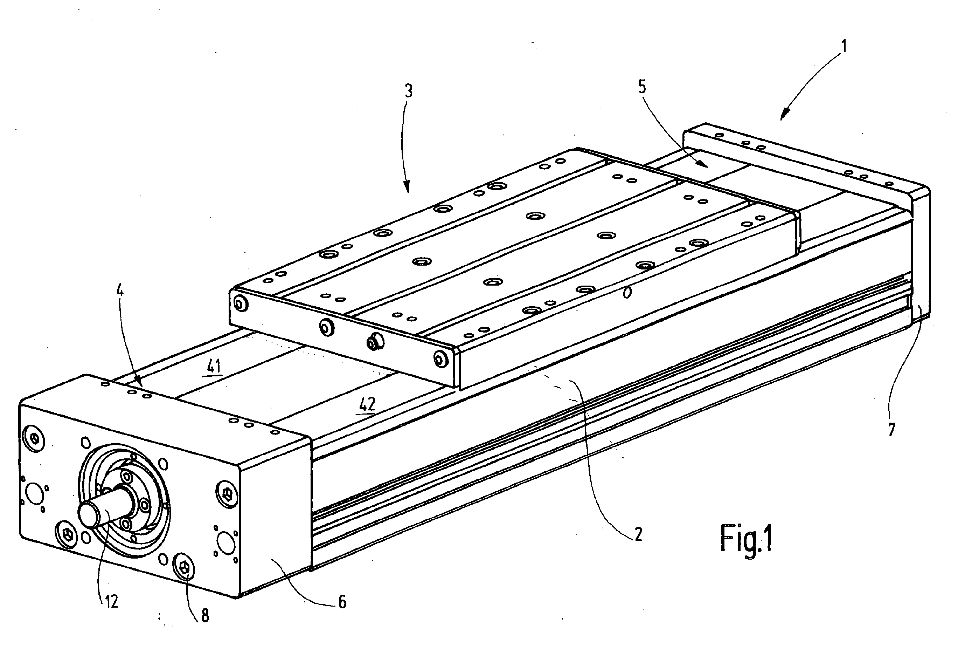

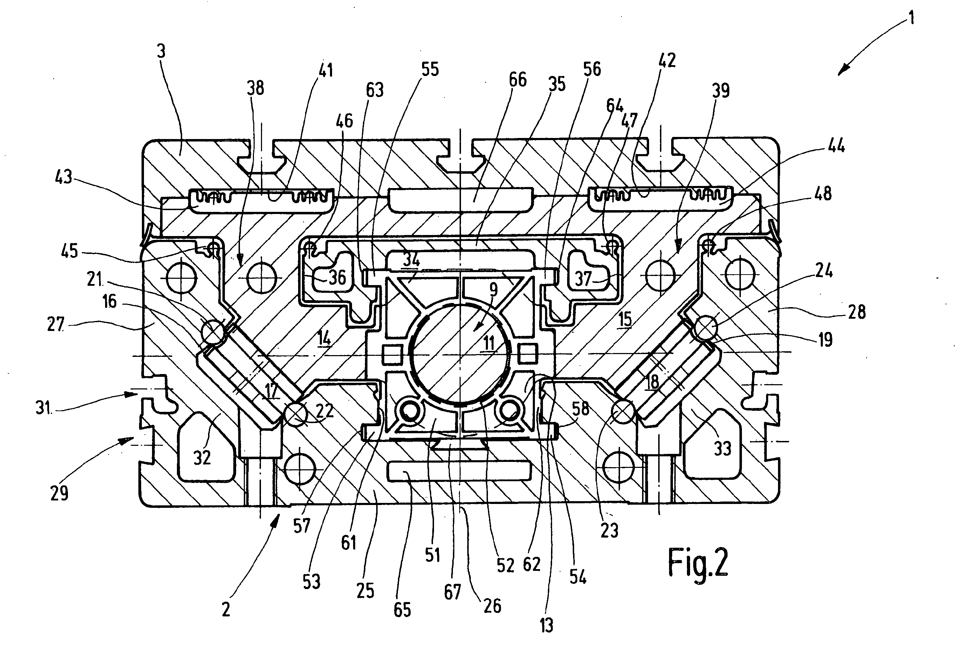

In Figur 1 ist eine Linearantriebseinrichtung 1 veranschaulicht, die einen Führungskörper 2 und einen daran längs verfahrbar gelagerten Schlitten 3 aufweist. Die Länge des Führungskörpers 2 ist nahezu beliebig. Sie wird dem jeweiligen Einsatzfall entsprechend angepasst. Der Führungskörper 2 trägt an seinen beiden Enden 4, 5 Lagergehäuse 6, 7, die seinen gesamten Querschnitt abdecken. Diese können beispielsweise durch Schrauben 8 gehalten sein und als Lager- oder Halteeinrichtung für einen nicht weiter veranschaulichten Motor oder ein Getriebe dienen, das zum Antrieb einer im Inneren des Führungskörpers 2 angeordneten Antriebseinrichtung 9 (Figur 2) dient. Diese wird beispielsweise durch eine Gewindespindel 11 gebildet, deren Ende 12 aus dem Lagergehäuse 6 herausragt. Auf der Gewindespindel 11 sitzt eine Gewindemutter, die mit dem Schlitten 3 verbunden ist. Dazu dienen zwei sich seitlich von der Gewindemutter weg erstreckende Stege 14, 15, die von der Gewindemutter zu dem Schlitten 3 führen. Zur Lagerung des Schlittens 3 tragen die Stege 14, 15 etwa auf gleicher Höhe mit der Gewindemutter Rollen 16, 17, 18, 19 (auf jeder Seite mindestens drei), die an Schienen 21, 22, 23, 24 abrollen.

Der Führungskörper 2 weist, wie insbesondere aus Figur 2 hervorgeht, einen flachen und im Außenumriss rechteckigen Querschnitt auf. Von seinem unteren flachen Grundabschnitt 25 ragen parallel zueinander und symmetrisch bezüglich einer Mittelebene 26 Seitenwangen 27, 28 auf, die außen mit Befestigungsnuten 29, sowie bedarfsweise Nuten 31 zur Unterbringung etwaiger Positionssensoren versehen sein können. Die Seitenwangen weisen eine Höhe auf, die vorzugsweise geringer ist als die halbe Breite des Grundabschnitts 25. Sie sind über einen aussteifenden Steg 32, 33 mit dem Grundabschnitt 25 verbunden. Der Steg 32, 33 begrenzt jeweils den Boden einer Tasche, deren zueinander parallele Flanken Vertiefungen für die Schienen 21, 22, 23, 24 aufweisen. Die Stege 32, 33 schließen mit dem Grundabschnitt 25 vorzugsweise einen Winkel von etwa 45° ein. Auf diese Weise lässt sich bei relativ großem Abstand zwischen den Schienen 21, 22 sowie 23, 24 durch die sich ergebende Schrägstellung der Rollen 16, 17, 18, 19 ein geringer Höhenbedarf der so gebildeten Lagereinrichtungen erhalten. Außerdem stehen die Achsen der Rollen 16, 17 rechtwinklig zu den Achsen der Rollen 18, 19.

Die Seitenwangen 27, 28 und der Grundabschnitt 25 umschließen einen Innenraum 34, der zur offenen Seite hin durch ein starres Mittelprofilelement 35 zumindest teilweise abgedeckt ist. Das Mittelprofilelement 35, z.B. ein Strangpressprofil, ist in Draufsicht etwa rechteckig, wobei es seine Flanken 36, 37 mit den parallel zu ihnen angeordneten Seitenwangen 27, 28 jeweils einen Schlitz 38 begrenzen, der sich über die gesamte Länge des Führungskörpers 2 erstreckt. Der Schlitz 38, 39 ist jeweils von dem Steg 14 bzw. 15 durchgriffen. Außerhalb des Schlittens ist er durch ein Abdeckband 41, 42 verschlossen, dessen Enden beispielsweise an den Lagergehäuse 6, 7 (Figur 1) gehalten sind. Im Bereich des Schlittens 3 erstreckt es sich durch entsprechende schlitzartige Längsdurchgänge 43, 44, wobei es an den stirnseitigen Enden des Schlittens in den jeweiligen Schlitz 38, 39 rückgeführt wird.

Die Schlitze 38, 39 weisen an beiden Seiten jeweils eine Rastrippe 45, 46, 47, 48 auf, die mit entsprechenden Rastlippen des Abdeckbands 41, 42 zusammenwirken, um dieses lösbar an dem jeweiligen Schlitz 38, 39 zu halten. Während die Rastrippen 45, 48 an den Seitenwangen 27, 28 angeordnet sind, schließen die Rastrippen 46, 47 unmittelbar an die Flanken 36, 37 des Mittelprofilelements 35 an.

Das Mittelprofilelement 35 ist mittelbar an dem Führungskörper 2 gehalten. Als Zwischenstücke dienen hier ein Spindelabstützelement 51, sowie weitere baugleiche, in Figur 2 vor oder hinter dem Abstützelement 51 liegende, Spindelabstützelemente. Das Spindelabstützelement 51, sowie die übrigen Spindelabstützelemente sind in dem Innenraum 34 des Führungskörpers 2 längs verschiebbar gelagert. Sie weisen eine zentrale Öffnung 52 auf, die dem Außendurchmesser der Gewindespindel 11 entspricht, so dass die Spindelabstützelemente 51 gegen die Spindel 11 verschoben werden können, dabei aber immer eine Gleitlagerung für die Gewindespindel 11 bilden.

Das hier stellvertretend für alle beschriebene Spindelabstützelement 51 ist in Vorderansicht gemäß Figur 2 etwa rechteckig, bzw. quadratisch im Umriss. An seinen Ecken ist es mit Führungsnasen 53, 54, 55, 56 versehen. Die Führungsnasen 53, 54, die an einander benachbarten Ecken des Spindelabstützelements 51 angeordnet sind, greifen in Führungsnuten 57, 58, die sich parallel zueinander längs durch den Führungskörper 2 erstrecken. Sie sind an aufeinander zu weisenden Flanken einer längs durchlaufenden Vertiefung angeordnet und öffnen sich aufeinander zu. Sie lagern das Spindelabstützelement 51 in Vertikalrichtung, d.h. auf den Grundabschnitt 25 zu und von diesem weg, unverrückbar. Die Flanken der Längsvertiefung wirken außerdem als seitliche Lagerung für das Spindelabstützelement. Dieses kann dazu entsprechende, als flache Längsrippen ausgebildete Lagervorsprünge 61, 62 aufweisen.

Mittelprofilelement 35 weist ebenfalls eine Längsausnehmung auf, in deren Seitenflanken Führungsnuten 63, 64 ausgebildet sind, die sich parallel zueinander und entlang der Flanken der Längsausnehmung erstrecken. Sie öffnen sich aufeinander zu und nehmen die Führungsnasen 54, 56 auf. Die Führungsnasen 53, 54, 55, 56 und die Führungsnuten 57, 58, 63, 64 weisen etwas Spiel zueinander auf, so dass die Längsverschiebbarkeit der Spindelabstützelemente gegeben ist.

Der Führungskörper weist einen bei der Ausführungsform nach Figur 2 nicht weiter genutzten, im Querschnitt rechteckigen, längs durchgehenden Hohlraum 65 auf, der symmetrisch zu der Mittelebene 26 angeordnet ist. Ein entsprechender ebenfalls zunächst nicht weiter genutzter Hohlraum 66 ist in dem Schlitten 3 angeordnet.

In dem die beiden Führungsnuten 57, 58 miteinander verbindenden Boden der Längsausnehmung des Grundabschnitts 25 ist eine Längsnut 67 mit Schwalbenschwanzquerschnitt ausgebildet, die der Aufnahme hier nicht weiter veranschaulichter einschiebbarer Profile dienen. Diese dienen zur Festlegung von Rastpositionen der Spindelabstützelemente. Diese können beispielsweise durch Bohrungen in dem einzuschiebenden Profil oder durch entsprechende Ausnehmungen in der Nähe stirnseitiger Stoßflächen von Einzelsegmenten solcher Profile festgelegt sein. Die Spindelabstützelemente enthalten eine nicht weiter veranschaulichte Rasteinrichtung, die mit den Profilen zusammenwirkt.

Die insoweit beschriebene Linearantriebseinrichtung 1 arbeitet wie folgt:

Eine Positionierung des Schlittens 3 erfolgt durch Drehung der Gewindespindel 11. Dabei läuft der Schlitten 3 in einer Richtung parallel zu den zueinander parallelen Schienen 21, 22, 23, 24. Die vor ihm liegenden Spindelabstützungen 51 werden gelöst und zusammengeschoben. In Fahrtrichtung hinter dem Schlitten werden Spindelabstützungen zurückgelassen und zwar in den jeweils definierten Rastpositionen, die von dem Element in der Längsnut 67 festgelegt sind.

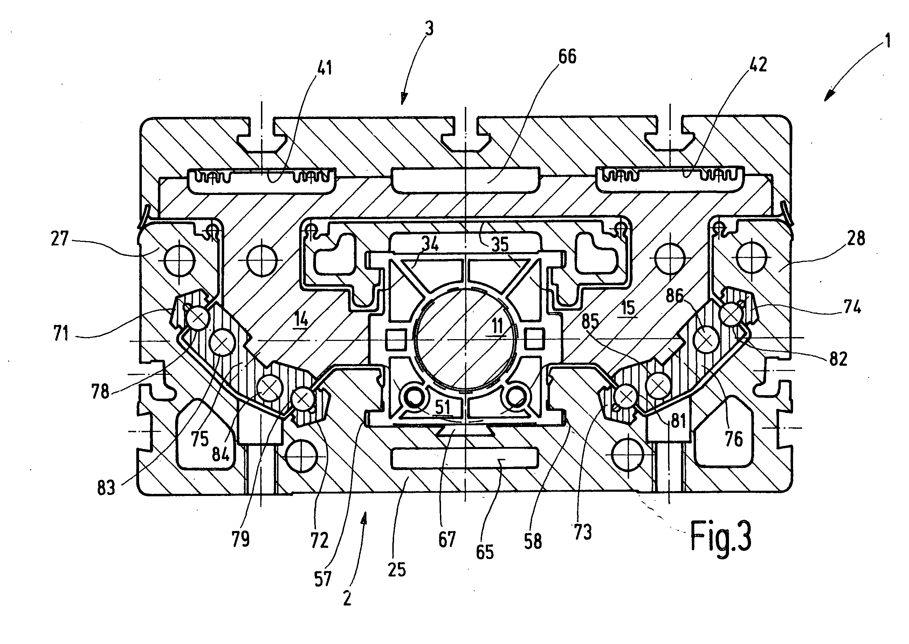

In Figur 3 ist eine abgewandelte Ausführungsform der Linearantriebseinrichtung 1 veranschaulicht. Diese stimmt weitgehend mit der im Zusammenhang mit Figur 1 und 2 beschriebenen Ausführungsform überein, so dass unter Zugrundelegung gleicher Bezugszeichen vollständig auf die vorstehende Beschreibung verwiesen wird. Zusätzlich gilt folgendes:

Abweichend von der Ausführungsform nach Figur 2 ist bei der Linearantriebseinrichtung 1 nach Figur 3, anstelle der Rollenlagerung für den Schlitten 3 eine Kugelumlauflagerung vorgesehen. Zu dieser gehören wiederum Schienen 71, 72, 73, 74, die jedoch nicht wie die Schienen 21, 22, 23, 24 als Rundprofile sondern als Hohlprofile ausgebildet sind. Jedem Schienenpaar 71, 72; 73, 74 ist ein Kugelumlaufblock 75, 76 zugeordnet, der jeweils den Schienen 71, 72 bzw. 73, 74 gegenüber liegende Lagerbahnen 78, 79, 81, 82 sowie Kugelrückführungsbohrungen 83, 84, 85, 86 aufweist. An den stirnseitigen Enden sind Kugelumleitstücke vorgesehen, die die Lagerbahn 78 mit der Kugelrückführungsbohrung 84 verbinden. Außerdem ist die Lagerbahn 79 mit der Kugelrückführungsbohrung 83 verbunden. Entsprechendes gilt für den Kugelumlaufblock 76.

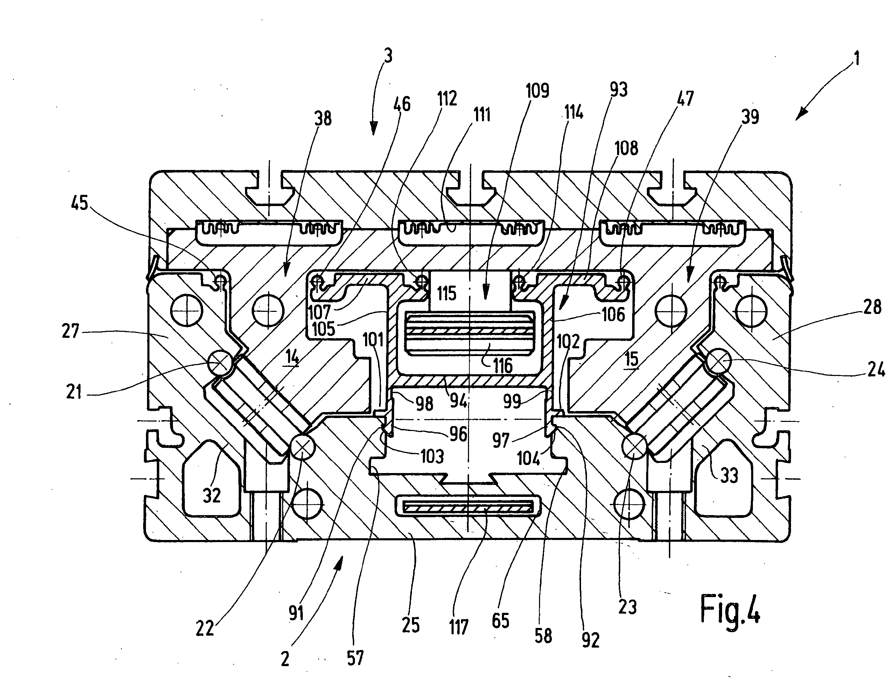

Eine weiter abgewandelte Ausführungsform der Linearantriebseinrichtung 1 ist Figur 4 zu entnehmen. Diese stimmt hinsichtlich ihres Führungskörpers 2, sowie der an dem Schlitten 3 vorgesehenen Lagereinrichtung (Rollen 16, 17, 18, 19 und Schienen 21, 22, 23, 24) mit der Ausführungsform nach Figur 2 überein. Entsprechend wird voll inhaltlich unter Zugrundelegung gleicher Bezugszeichen auf die entsprechenden Beschreibungsteile der vorliegenden Figurenbeschreibung verwiesen. Ergänzend gilt folgendes:

Der Führungskörper 2 weist an den Flanken seiner in den Grundabschnitt 25 angebrachten Längsausnehmung Rastnuten 91, 92 auf, die aufeinander zu weisen. Die Rastnuten verlaufen parallel zueinander. Die Führungsnuten 57, 58, die bei den vorstehend beschriebenen Ausführungsformen als Halteeinrichtung zur Befestigung des Mittelprofilelements 35 gedient haben, bleiben hier unbenutzt. Anstelle dessen dienen die Rastnuten 91, 92 zur Befestigung eines Mittelprofilelements 93, das bei allen Ausführungsformen der Linearantriebseinrichtung 1 Anwendung findet, bei denen der Schlitten 3 über Zugmittel betätigt wird. Das Mittelprofilelement 93 weist einen parallel zu dem Grundabschnitt 25 angeordneten Steg 94 auf, der an seinen beiden langen Schmalseiten zwei sich parallel zueinander in Richtung auf den Grundabschnitt 25 erstreckende Rastschenkel 96, 97 aufweist. Diese schließen sich über einen geschwächten Abschnitt 98, 99 an den Steg 94 an. Der geschwächte Abschnitt 98, 99 ermöglicht eine gewisse federnde Nachgiebigkeit der Rastschenkel 96, 97, so dass diese geringfügig aufeinander zu und voneinander weg federn können.

Die Rastschenkel 96, 97 weisen außen Auflagerippen 101, 102 auf, mit denen sich die Rastschenkel 96, 97 an der Oberseite des Grundabschnitts 25 abstützen. An ihrer Außenseite sind sie unterhalb der Auflagerippen 101, 102 mit Rastrippen 103, 104 versehen, die in die Rastnuten 91, 92 greifen. Die Rastrippen 103, 104 können ein Sägezahnprofil haben, um in einer Rastbewegung vertikal auf den Grundabschnitt 25 zu in die Rastnuten 91, 92 eingesetzt werden zu können. Alternativ kann das Mittelprofilelement 93 längs eingeschoben werden.

Oberhalb des Stegs 94 ragen von dem Steg 94 zwei Seitenwände 105, 106 parallel zueinander auf, die mit dem Steg 94 ein steifes Profil bilden. Jede Seitenwand 105, 106 trägt oben einen Plattenabschnitt 107, 108, die in einer gemeinsamen Ebene liegen und mit den oberen Enden der Seitenwangen 27, 28 abschließen. Der Plattenabschnitt 107 definiert mit der Seitenwange 27 den Schlitz 38. Entsprechend trägt er die Rastrippe 46. Der Plattenabschnitt 108, der mit der Seitenwange 28 den Schlitz 39 festlegt, trägt an seiner der Seitenwange 28 zugewandten Seite die Rastrippe 47.

Die Plattenabschnitte 107, 108 begrenzen zwischeneinander einen dritten Schlitz 109. Zur Lagerung eines weiteren Abdeckbands 111 sind an den beiden aufeinander zu weisenden Kanten der Plattenabschnitte 107, 108 Rastrippen 112, 114 angeordnet. Der Schlitz 109 ist von einem Steg 115 durchragt, der den Schlitten 3 mit einem oberhalb des Stegs 94 laufenden Antriebsband oder Riemen 116 verbindet. Der Riemen 116 läuft über Umlenkrollen, die an den Lagergehäusen 6, 7 vorgesehen sind. Durch den Hohlraum 65 läuft der rücklaufende Abschnitt 117 des Riemens 116.

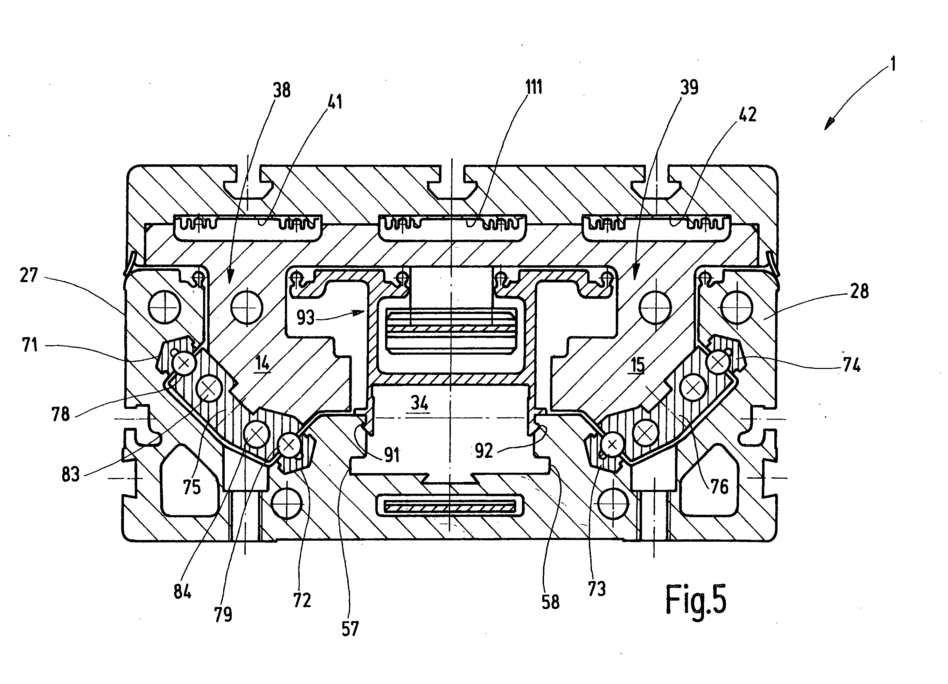

Figur 5 veranschaulicht eine weitere Ausführungsform der Linearantriebseinrichtung 1, die weitgehend mit der Linearantriebseinrichtung 1 nach Figur 4 übereinstimmt. Es wird entsprechend auf die vorstehende Beschreibung verwiesen. Abweichend davon ist jedoch eine Lagereinrichtung gemäß der Ausführungsform nach Figur 3 und der zugehörigen Beschreibung vorgesehen. Sie beruht auf einer oder mehreren Kugelumlaufführungen. Auf die Beschreibung zu Figur 3 wird unter Zugrundelegung gleicher Bezugszeichen verwiesen.

Eine Linearantriebseinrichtung 1 weist einen Führungskörper 2 auf, in dessen Innenraum 35 eine Halteeinrichtung vorgesehen ist, die durch Führungsnuten 57, 58 und/oder Rastnuten 91, 92 gebildet ist. Diese dienen der Befestigung eines Mittelprofilelements 35 oder 93, das den Innenraum 34 nach außen abdeckt. Das Mittelprofilelement 35 begrenzt mit dem Führungskörper 2 zwei Schlitze 38, 39, die relativ schmal sind und mit schmalen Abdeckbändern 41, 42 abgedeckt werden können. Dadurch wird es möglich, relativ breite, dafür aber flache Führungskörper 2 vorzusehen, bei denen die Lagereinrichtung an beiden Seiten des Grundabschnitts 25 angeordnet ist. Dies ergibt eine hohe Steifigkeit und eine gute Führung des Schlittens 3. Außerdem können an der Halteeinrichtung 57, 58, 91, 92 unterschiedliche Mittelprofilelemente 35, 93 angeschlossen werden, die unterschiedliche Antriebskonzepte mit ein und demselben Führungskörper 2 ermöglichen.

## Patentansprüche

1. Linearantriebseinrichtung
mit einem Führungskörper (2), der einen Innenraum (34) zur Aufnahme einer Antreibseinrichtung (11) umschließt und der in dem Innenraum (34) eine Halteeinrichtung (57, 58, 91, 92) zur Befestigung eines Mittelprofilelements (35, 93) aufweist.

2. Linearantriebseinrichtung nach Anspruch 1, **dadurch gekennzeichnet, dass** der Führungskörper (2) einen im Wesentlichen flachen Grundabschnitt (25) mit zwei langen Kanten aufweist, von denen zueinander parallele Seitenwangen (27, 28) aufragen.

3. Linearantriebseinrichtung nach Anspruch 1, **dadurch gekennzeichnet, dass** in dem Innenraum (34) eine Lagereinrichtung (21, 22, 23, 24, 16, 17, 18, 19; 71, 72, 73, 74, 75, 76) für einen linear beweglich gelagerten Schlitten (3) vorgesehen ist.

4. Linearantriebseinrichtung nach Anspruch 3, **dadurch gekennzeichnet, dass** zu der Lagereinrichtung zwei Führungsbahnenpaare (21, 22; 23, 24 bzw. 71, 72; 73, 74) gehören.

5. Linearantriebseinrichtung nach Anspruch 2 und 4, **dadurch gekennzeichnet, dass** zu jedem Führungsbahnenpaar (21, 22; 23, 24 bzw. 71, 72; 73, 74) eine an der Seitenwange (27, 28) gehaltene Führungsbahn (21, 24 bzw, 71, 74) und eine an dem Grundabschnitt (25) gehaltenen Führungsbahn (22, 23 bzw. 72, 73) gehören.

6. Linearantriebseinrichtung nach Anspruch 5, **dadurch gekennzeichnet, dass** die Führungsbahnen (21, 22 bzw. 71, 72) eines Führungsbahnenpaars (21, 22 bzw. 71, 72) jeweils in einer gemeinsamen Ebene angeordnet sind, die mit dem Grundabschnitt (25) einen Winkel von 40° bis 50° einschließt.

7. Linearantriebseinrichtung nach Anspruch 2, **dadurch gekennzeichnet, dass** die Halteeinrichtung (57, 58; 91, 93) an dem Grundabschnitt (25) ausgebildet ist.

8. Linearantriebseinrichtung nach Anspruch 4, **dadurch gekennzeichnet, dass** die Halteeinrichtung (57, 58; 91, 93) zwischen den beiden Führungsbahnenpaaren (21, 22; 23, 24 bzw. 71, 72; 73, 74) angeordnet ist.

9. Linearantriebseinrichtung nach Anspruch 1, **dadurch gekennzeichnet, dass** zu der Halteeinrichtung (57, 58; 91, 93) Formschlussprofile gehören.

10. Linearantriebseinrichtung nach Anspruch 9, **dadurch gekennzeichnet, dass** die Formschlussprofile sich längs an einer Wand des Innenraums (34) erstreckende Profile sind.

11. Linearantriebseinrichtung nach Anspruch 9, **dadurch gekennzeichnet, dass** die Halteeinrichtung durch zwei zueinander parallele, aufeinander zu weisende Nuten (57, 58 bzw. 91, 92) gebildet ist.

12. Linearantriebseinrichtung nach Anspruch 1, **dadurch gekennzeichnet, dass** das Mittelprofilelement (93) mit der Halteeinrichtung (91, 92) unmittelbar verbunden ist.

13. Linearantriebseinrichtung nach Anspruch 1, **dadurch gekennzeichnet, dass** Mittelprofilelement (35) mit der Halteeinrichtung (57, 58) mittelbar über Zwischenstücke verbunden ist.

14. Linearantriebseinrichtung nach Anspruch 13, **dadurch gekennzeichnet, dass** die Zwischenstücke Spindelabstützelemente (51) sind.

15. Linearantriebseinrichtung nach Anspruch 2, **dadurch gekennzeichnet, dass** das Mittelprofilelement (35, 93) mit den beiden Seitenwangen (27, 28) in einer Ebene abschließt.

16. Linearantriebseinrichtung nach Anspruch 2, **dadurch gekennzeichnet, dass** das Mittelprofilelement (35, 93) mit den beiden Seitenwangen (27, 28) jeweils einen Schlitz (38, 39) begrenzt, der von jeweils wenigstens einem Steg (14, 15) eines Schlittens (3) durchgriffen ist.

17. Linearantriebseinrichtung nach Anspruch 1, **dadurch gekennzeichnet, dass** an dem Mittelprofilelement (35, 93) und den Seitenwangen (27, 28) Befestigungselemente (46, 47, 48, 49) zur lösbaren Halterung von Abdeckbändern (41, 42) angeordnet sind.
